# EUROPÄISCHE PATENTSCHRIFT

(11) **EP 4 046 463 B1**
(45) Veröffentlichungstag und Bekanntmachung des Hinweises auf die Patenterteilung: **15.05.2024**
(21) Anmeldenummer: 20785899.4
(22) Anmeldetag: 24.09.2020
(51) Int. Cl.: H05B 3/12, H05B 3/26, A01K 47/04, A01K 51/00

(54) **MITTELWAND FÜR EINEN BIENENSTOCK ZUR HYPERTHERMISCHEN VARROADEZIMIERUNG**
CENTRAL WALL FOR A BEEHIVE FOR HYPERTHERMIC ERADICATION OF VARROA MITES
PAROI INTERMÉDIAIRE POUR RUCHE POUR LA DÉCIMATION HYPERTHERMIQUE DU VARROA

(30) Priorität: 17.10.2019 AT 602322019; 22.04.2020 AT 503432020
(43) Veröffentlichungstag der Anmeldung: 24.08.2022
(73) Patentinhaber: youbee GmbH, 8143 Dobl-Zwaring (AT)
(72) Erfinder: VELIKONJA, David, 8510 Stainz (AT); BREINL, Robert, 8401 Kalsdorf bei Graz (AT); SCHEIBER, Hannes, 8401 Kalsdorf bei Graz (AT)
(74) Vertreter: Röggla, Harald
(86) Internationale Anmeldenummer: PCT/AT2020/060345
(87) Internationale Veröffentlichungsnummer: WO 2021/072463

(56) Entgegenhaltungen:
- WO-A1-2015/087197
- WO-A1-2015/097218
- WO-A1-2017/210410
- DE-U1-202015 107 038

## Beschreibung

Die Erfindung betrifft eine hyperthermische Varroadezimierung mittels beheizbaren Mittenwänden der Bienenbrutwaben und/oder das Beheizen von Honigwaben zur Maximierung der Ernteerträge.

In der modernen Bienenzucht werden Holzrahmen mit Wachsmittelwänden verwendet um, den Bienen eine geordnete Baumöglichkeit für ihre Brut- und Honigwaben zu ermöglichen.

Überdies ist bekannt, Bienenstöcke zum Zwecke der Varroadezimierung zu beheizen. Als Stand der Technik kann beispielsweise die Schrift DE 20 2015 107 038 U1 genannt werden. Gemäß dieser Offenbarung werden elektrisch beheizte Mittelwände in einen Bienenkasten eingesetzt. Zu diesem Zweck ist in die Mittelwand ein Widerstandsheizelement in Form einer rechteckigen Heizspirale eingelassen. Die Spirale ist auf die zentrale Fläche der Mittelwand beschränkt. Zur verbesserten Steuerbarkeit des Heizelements ist die Heizspirale als Kaltleiter mit linearem PTC-Effekt (Positive Temperature Coefficient) ausgebildet, wodurch die Steuerung der Temperatur in der Aufheizphase erleichtert werden kann.

Ein Problem dieser Ausführungsform ist, dass es durch die Heizspirale zu einem ungleichmäßigen Wärmeeintrag in Bereiche mit geringer thermischer Masse und hoher thermischer Masse kommt, z.B. Honig oder Brut, wodurch sogenannte Hotspots entstehen können. Dies führt insbesondere zur Überhitzung kleinerer Bereiche, wodurch die Bienenbrut beschädigt werden kann.

Weitere beheizte Mittelwände sind aus den Schriften DE 102015115103 A1, DE 202015002350 U1 und WO 2015087197 A1 bekannt. In diesen Dokumenten werden jeweils Mittelwände mit vollflächigen Heizelementen und integrierten Temperatursensoren offenbart. Diese Mittelwände erfordern eine Steuereinrichtung, welche die Heizelemente in Abhängigkeit von einer von den Temperatursensoren gemessenen Ist-Temperatur ansteuern, um die Mittelwände auf eine Soll-Temperatur zu bringen. Derartige Steuerungsverfahren sind jedoch einerseits träge und andererseits müssen die Steuerungseinrichtungen witterungsfest ausgebildet werden, um sie im Outdoor-Bereich der Bienenzucht einzusetzen.

Es ist somit die Aufgabe der Erfindung, eine beheizbare Mittelwand für einen Bienenstock zu schaffen, welche die Nachteile des Standes der Technik überwindet.

Diese Aufgabe wird gelöst durch eine beheizbare Mittelwand für einen Bienenstock zur hyperthermischen Varroadezimierung und/oder zum Beheizen von Honigwaben zur Maximierung der Ernteerträge, wobei die Mittelwand einen vollflächigen PTC-Heizlack mit einem nichtlinearen PTC-Effekt umfasst und wobei die Mittelwand auf zumindest einer Seite des PTC-Heizlacks eine Lage mit einem Wabenmuster aufweist. Durch diese Anordnung werden die eingangs erwähnten Nachteile des Standes der Technik überwunden.

Der nichtlineare PTC-Effekt bewirkt, dass der Widerstand des PTC-Heizlacks ab einer vorbestimmten Temperatur derart hoch wird, dass ein weiterer Stromfluss durch den PTC-Heizlack weitgehend unterbunden wird und es daher zu keiner weiteren Temperaturerhöhung kommt. Dies bewirkt im Zusammenspiel mit der vollflächigen Anbringung des PTC-Heizlacks über die Fläche der Mittelwand, dass es nicht zu Hotspots kommt. Durch den nichtlinearen Effekt des PTC-Heizlacks muss dieser auch nicht besonders angesteuert werden, um eine Maximaltemperatur nicht zu überschreiten. Es muss somit auch keine Steuereinrichtung zur korrekten Beheizung der Mittelwand eingesetzt werden. Überdies müssen in oder an der Mittelwand keine Temperatursensoren vorgesehen werden, um eine Rückkopplung für eine Steuereinrichtung vorzusehen.

Bevorzugt ist der PTC-Heizlack auf einem von der Lage gesonderten Substrat oder unmittelbar auf der Lage aufgedruckt. Das Substrat kann dem PTC-Heizlack eine zusätzliche Steifigkeit verleihen. Das Aufdrucken des PTC-Heizlacks auf der Lage ermöglicht jedoch eine einfachere Herstellung.

In der vorgenannten Ausführungsform ist der Heizlack Carbonlack, denn dadurch können mit der PTC-Heizfolie Temperaturen erreicht werden, die sich insbesondere zur Varroadezimierung eignen.

In den vorgenannten Ausführungsformen ist weiters bevorzugt ein Schutzlack auf einer Seite des Heizlacks vorgesehen. Dies schützt vor einem unmittelbaren Anschmelzen der Lage mit dem Wabenmuster auf den Heizlack, sodass der Heizlack nicht beschädigt wird.

Um die strukturelle Integrität der Mittelwand weiter zu erhöhen, kann zwischen der PTC-Heizfolie und den Lagen auf beiden Seiten ein Edelstahlblech, eine Kunststoffplatte oder eine Kunststofffolie angeordnet sein. Dadurch kann erreicht werden, dass die Mittelwand eine höhere Steifigkeit aufweist, wodurch ein Durchbiegen der Mittelwand beim Einbau in ein Rähmchen verhindert wird.

Weiters bevorzugt kann die PTC-Heizfolie als Niederspannungsteil ausgeführt sein, d.h. die PTC-Heizfolie wird mit einer Spannung von bis zu 48 V betrieben. In anderen Worten erreicht die PTC-Heizfolie eine Temperatur von 40 °C bis 42 °C, wenn an diese eine konstante Spannung von beispielsweise 12 V, 24 V oder 48 V angelegt wird. Dies verhindert, dass es bei einem Gebrechen der Mittelwand zu weiteren Gefahren kommt, denn die Kontaktierungen der Mittelwand liegen in den meisten Ausführungsformen frei.

Die genannte Lage mit dem Wabenmuster kann beispielsweise eine Wachsschicht sein, wie sie aus dem Stand der Technik bekannt ist. Aus wirtschaftlichen Gründen ist jedoch bevorzugt, wenn die zumindest eine Lage eine Kunststoffwand mit Wachsüberzug ist, wobei die Kunststoffwand das Wabenmuster aufweist. Diese Lage ist günstiger herzustellen als eine Wachsschicht und kann auch bessere strukturelle Eigenschaften wie beispielsweise eine höhere Steifigkeit aufweisen.

In der letztgenannten Ausführungsform besteht die Kunststoffwand bevorzugt aus rePET, d.h. aus recyceltem Polyethylenterephthalat (PET), sodass die Kunststoffwand umweltschonender hergestellt werden kann.

Erfindungsgemäß kann somit eine Vorrichtung zur Bereitstellung eines Wabenmusters in einem Bienenstock geschaffen werden, welche eine Mittelwand in einer der vorgenannten Ausführungsformen und ein Rähmchen mit einem Zwischenraum in der Größe der Mittelwand umfasst.

Einerseits kann die Mittelwand wie im Stand der Technik bekannt an Drähte des Rähmchens gelötet werden. Bevorzugt ist jedoch, wenn die Vorrichtung zumindest zwei Klammereinrichtungen umfasst, wobei die Klammereinrichtung die Mittelwand im Rähmchen fixiert und zumindest eine Klammer aufweist, welche das Rähmchen oder die Mittelwand lösbar einklemmt.

Durch die erfindungsgemäße Lösung mit der zumindest einen Klammereinrichtung, in der die Mittelwand oder das Rähmchen lösbar eingeklemmt ist, wird einerseits die Möglichkeit geschaffen, eine Mittelwand in einem Rähmchen zu montieren, ohne dass hierfür eine dauerhafte Verbindung geschaffen werden muss. Somit funktioniert der Einbau der Mittelwände schneller als dies bei Ausführungsformen der Fall ist, in denen die Mittelwände mit darunterliegenden Drähten verlötet werden.

Da die Klammereinrichtung jedoch auch wieder schnell vom Rähmchen bzw. von der Mittelwand genommen werden kann, können die Mittelwände wieder genauso schnell aus dem Rähmchen entnommen werden, wie sie eingebaut wurden. Es besteht keine Notwendigkeit, Drähte abzuzwicken oder andere Elemente des Rähmchens oder der Mittelwand unwiederbringlich zu zerstören, um die Mittelwand aus dem Rähmchen herauszunehmen.

Besonders bevorzugt weist die Klammereinrichtung eine erste Klammer und eine zweite Klammer auf, wobei die erste Klammer das Rähmchen lösbar einklemmt und die zweite Klammer die Mittelwand lösbar einklemmt. Dadurch können auch bereits bestehende Rähmchen und Mittelwände nachgerüstet werden, ohne dass die Klammereinrichtungen an das Rähmchen oder die Mittelwand angeschraubt werden müssten.

Wird nur eine Klammereinrichtung eingesetzt, kann diese die Mittelwand an einer Seite oder an einem Eck am Rähmchen fixieren und an den anderen Seiten bzw. Ecken lediglich lose gehalten werden. Werden nur zwei Klammereinrichtungen eingesetzt, könnten diese die Mittelwand an zwei gegenüberliegenden Seiten des Rähmchens halten. Bevorzugt weist die Mittelwand jedoch eine rechteckige Form auf und die Vorrichtung umfasst vier Klammereinrichtungen, wobei die Klammereinrichtungen die Mittelwand in der geschlossenen Stellung an jeweils einer Ecke im Rähmchen hält. Dies schafft eine besonders stabile Montage der Mittelwand im Rähmchen.

Um die Verbindung zwischen der Mittelwand und den Klammereinrichtungen weiter zu verbessern, weist die Mittelwand für jede Klammereinrichtung eine Öse oder ein Loch auf, in welche je eine Klammereinrichtung in der geschlossenen Stellung eingreift. Die Ösen bzw. Löcher ermöglichen einen formschlüssigen Eingriff der Klammereinrichtungen, wodurch ein Verrutschen der Mittelwand unterbunden wird. Da die Mittelwand erfindungsgemäß mit einer innenliegenden PTC-Heizfolie ausgestattet ist, ermöglichen die Ösen überdies einen vereinfachten Zugriff auf einen Anschluss der PTC-Heizfolie.

Bevorzugt werden die Klammereinrichtungen aus Federstahl oder Kunststoff, bevorzugt glasfaserverstärktem Polyamid (PA), gefertigt. Es hat sich herausgestellt, dass durch Federstahl bzw. Kunststoff einerseits ein genügend hoher Widerstand erzielt werden kann, sodass die Klammereinrichtungen die Mittelwand im Rähmchen halten können. Andererseits kann Federstahl bzw. Kunststoff auch manuell genügend weit aufgebogen werden, um die Mittelwand aus dem Rähmchen zu nehmen. Der Federstahl bzw. Kunststoff ermöglicht eine einstückige Fertigung der Klammereinrichtungen, wodurch keine gesonderten Elemente wie Zugfedern anfallen. Die Klammereinrichtung ist somit besonders fehlerunanfällig.

Besonders bevorzugt kann durch zumindest eine der Klammereinrichtungen eine elektrische Kontaktierung gebildet werden, welche in der geschlossenen Stellung der Klammereinrichtung eine elektrische Verbindung mit der PTC-Heizfolie der Mittelwand herstellt. Dadurch muss die PTC-Heizfolie der Mittelwand keinen gesonderten Stecker oder ähnliches aufweisen, sondern die elektrische Kontaktierung erfolgt gleichzeitig mit dem Befestigen der Mittelwand im Rähmchen.

Die elektrische Kontaktierung kann insbesondere dann einfach erfolgen, wenn das Rähmchen an zwei seiner Ecken jeweils eine Außenlasche zum Einhängen in den Bienenstock umfasst und jene zwei Klammereinrichtungen Kontaktierungen zur PTC-Heizfolie bilden, die neben den Außenlaschen des Rähmchens liegen. Die Außenlaschen des Rähmchens konnten dadurch gleichzeitig zum Einhängen in den Bienenstock und zur erweiterten Kontaktierung verwendet werden.

Erfindungsgemäß kann somit in der Folge ein Bienenstock mit einer Vorrichtung in einer der obengenannten Ausführungsformen bereitgestellt werden. Liegen die elektrisch kontaktierten Klammereinrichtungen neben den Außenlaschen vor, können bevorzugt im Bienenstock zwei Leisten montiert sein, welche die Positionierung und Energieverteilung auf das Rähmchen gewährleisten.

In einem weiteren Aspekt betrifft die Erfindung ein Verfahren zum Herstellen einer beheizbaren Mittelwand für einen Bienenstock zur hyperthermischen Varroadezimierung und/oder zum Beheizen von Honigwaben zur Maximierung der Ernteerträge, umfassend die Schritte:
- Bereitstellen einer ersten Lage, bevorzugt einer Folie,
- vollflächiges Aufdrucken eines PTC-Heizlacks mit nichtlinearem PTC-Effekt auf die erste Lage,
- gegebenenfalls Aufbringen einer zweiten Lage, bevorzugt einer Folie, auf den aufgedruckten PTC-Heizlack gegenüber der ersten Lage,
- Versehen der ersten Lage und gegebenenfalls der zweiten Lage mit einem Wabenmuster.

In einer bevorzugten Ausführungsform werden vor dem Aufdrucken des PTC-Heizlacks Leiterbahnen auf die erste Lage aufgedruckt werden, wobei die Leiterbahnen bevorzugt aus Silber bestehen und wobei die Leiterbahnen weiters bevorzugt eine mäanderförmige Ausnehmung ausbilden. In dieser Ausführungsform ist weiters bevorzugt, wenn die Leiterbahnen entlang einer Längsrichtung der ersten Lage verlaufen und der PTC-Heizlack streifenweise auf die erste Lage aufgedruckt wird, wobei die Streifen entlang einer Querrichtung normal zur genannten Längsrichtung verlaufen.

Weiters wird bevorzugt, wenn vor dem Aufbringen der zweiten Lage eine Klebschicht auf die erste Lage aufgebracht wird, jedoch nur an jenen Stellen, die frei von PTC-Heizlack sind. Danach kann der derart hergestellte Verbund zum Verfestigen durch eine Walze gezogen werden.

In einer bevorzugten Ausführungsform erfolgt das Aufbringen des Wabenmusters durch Beschichten der ersten Lage und gegebenenfalls der zweiten Lage mit geschmolzenem Wachs im Wabenmuster, wobei das Wabenmuster bevorzugt durch zumindest eine Walze aufgeprägt wird. Dies ermöglicht eine besonders gute Haftung des Wachses auf der ersten Lage.

Um das Einhängen der Mittelwand in ein Rähmchen zu ermöglichen, weist die erste Lage in zwei Eckbereichen ein erstes Loch mit einem ersten Durchmesser auf und die zweite Lage in den zwei gleichen Eckbereichen ein zweites Loch mit einem zweiten Durchmesser, der zur Kontaktierung an den Leiterbahnen bevorzugt großer als der erste Durchmesser ist.

Vorteilhafte und nicht einschränkende Ausführungsformen der Erfindung werden nachfolgend anhand der Zeichnungen näher erläutert.
Figur 1 zeigt ein Rähmchen mit darin montierter Mittelwand in einer Vorderansicht.
Figur 2 zeigt den Aufbau der Mittelwand von Figur 1.
Figur 3 zeigt die Mittelwand ohne Lage mit Wabenmuster in einer Perspektivansicht.
Figur 4 zeigt die Mittelwand von Figur 3, wobei eine Lage mit Wabenmuster auf die Mittelwand aufgebracht wird.
Figur 5 zeigt die Heizkurve der PTC-Heizfolie der erfindungsgemäßen Mittelwand in einem Diagramm.
Figur 6 zeigt eine erste Variante einer Klammereinrichtung in einer Perspektivansicht.
Figur 7 zeigt die Klammereinrichtung von Figur 6 in einer Seitenansicht.
Figur 8 zeigt eine zweite Variante einer Klammereinrichtung in einer Perspektivansicht.
Figur 9 zeigt eine kontaktierende Leiste für einen Bienenstock, in der mehrere Mittelwände eingehängt und kontaktiert werden können.
Figur 10 zeigt eine bevorzugte Ausführungsform einer erfindungsgemäßen Mittelwand.

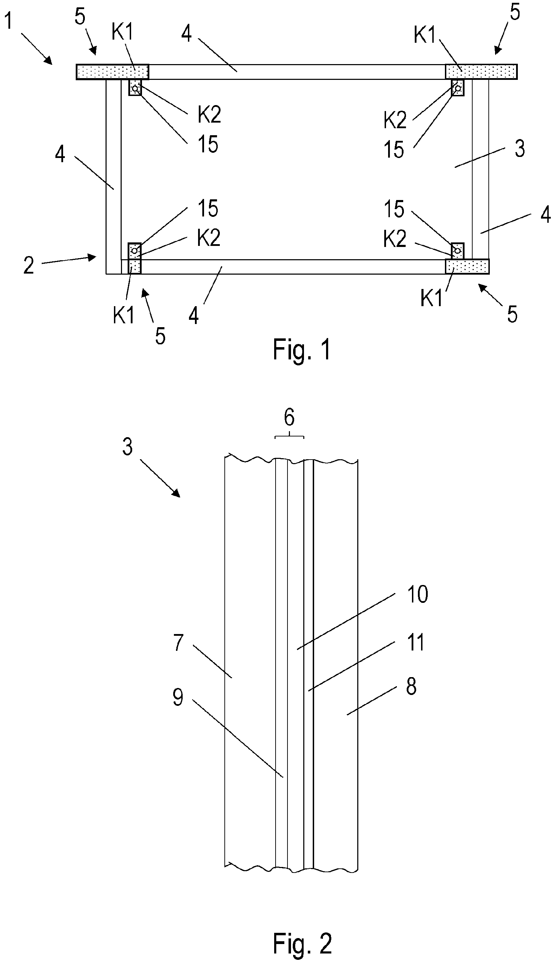

Figur 1 zeigt eine Vorrichtung 1, die ein Rähmchen 2 und eine darin montierte Mittelwand 3. Das Rähmchen 2 besteht aus vier Holzleisten 4, die derart zueinander angeordnet sind, dass sich zwischen den Holzleisten 3 ein Zwischenraum ergibt, der zur Aufnahme der Mittelwand 3 ausgebildet ist. Der Zwischenraum kann beispielsweise gleichgroß oder kleiner als die Mittelwand 3 sein.

In der dargestellten Ausführungsform ist die Mittelwand 3 rechteckig. Die Maße der Rähmchen und in der Folge auch der Mittelwand 3 sind genormt, sodass das Rähmchen 2 beispielsweise eine Länge von 250 mm bis 500 mm und die Höhe des Rähmchens 100 mm bis 300 mm betragen kann. Die Erfindung ist jedoch nicht auf diese Maße beschränkt und das Rähmchen 2 bzw. die Mittelwand 3 könnten sogar eine andere Form als ein Rechteck einnehmen und/oder das Rähmchen 2 könnte aus einem anderen Material als Holz bestehen, beispielsweise aus Kunststoff.

Um die Mittelwand 3 im Rähmchen 2 zu fixieren, kann die Mittelwand 3 auch mit Klammereinrichtungen 5 im Rähmchen fixiert sein, wie unten im Detail beschrieben ist.

Das Rähmchen 2 mit montierter Mittelwand 3 ist dazu ausgebildet, in einen nicht weiter dargestellten Bienenstock eingesetzt zu werden, sodass Bienen auf der Mittelwand 3 Honigwaben bilden. Beispielsweise können zehn Rähmchen 2 mit darin montierten Mittelwänden 3 in einen Bienenstock eingesetzt werden. Damit die Bienen gleichmäßige Honigwaben auf der Mittelwand 3 bilden, ist diese auf zumindest einer Seite mit einem Wabenmuster versehen. Üblicherweise ist die Mittelwand 3 auf beiden Seiten mit einem Wabenmusterversehen.

Die erfindungsgemäße Ausführungsform, in der die Mittelwand 3 zum Beheizen einen vollflächigen PTC-Heizlack 10 aufweist, wird im Folgenden beschrieben.

Der Schichtaufbau der Mittelwand 3 mit PTC-Heizlack 10 kann auf verschiedenste Arten ausgestaltet sein. Einerseits kann der PTC-Heizlack 10 unmittelbar auf eine der Lage 7, 8 aufgedruckt werden. Diese Lage 7, 8 kann somit auf einer Seite ein eingeprägtes Wabenmuster und auf der anderen Seite den aufgedruckten PTC-Heizlack 10 umfassen.

Wie in Figur 2 gezeigt kann die Mittelwand 3 auch eine vollflächige PTC-Heizfolie 6 mit einem nichtlinearen PTC-Effekt umfassen, auf welcher auf beiden Seiten eine Lage 7, 8 in einem Wabenmuster vorgesehen ist. Die Lage 7, 8 kann beispielsweise eine Wachsschicht sein. Im Beispiel von Figur 2 ist die Mittelwand 3 von links nach rechts wie folgt aufgebaut: Wachsschicht 7, Trägerfolie (Substrat) 9, PTC-Heizlack 10, Schutzlack 11, Wachsschicht 8.

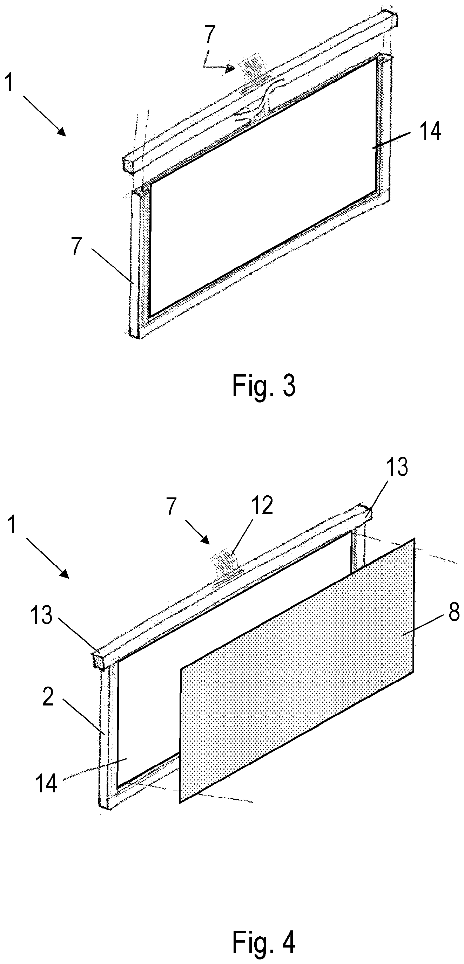

Zusammen bilden die Trägerfolie 9 und der PTC-Heizlack 10 die PTC-Heizfolie 6, die üblicherweise als Niederspannungsbauteil ausgebildet ist. Der Heizer besteht somit aus einem Substrat 9, bevorzugt mit geätzten oder gedruckten Elektroden 12 (siehe Figur 3), und darauf aufgedruckter aktiver Schicht, d.h. dem PTC-Heizlack 10. Der PTC-Heizlack 10 ist bevorzugt ein Carbonlack, könnte jedoch auch jeder andere Heizlack sein, der einen nichtlinearen PTC-Effekt aufweist und daher eine vorbestimmte Temperatur nicht überschreitet.

Wie dargestellt kann die PTC-Heizfolie 6 auf der Vorderseite und der Rückseite mit der genannten Lage 7, 8 mit dem Wabenmuster versehen sein. Alternativ könnte die genannte Lage 7, 8 auch nur auf einer Seite der PTC-Heizfolie 6 vorgesehen sein. Das Wabenmuster ist jeweils auf jener Seite der Lage 7, 8 vorgesehen, die der PTC-Heizfolie 6 abgewandt ist. Die Lage 7, 8 könnte das Wabenmuster aber auch auf beiden Seiten aufweisen.

Die Lage 7, 8 kann wie im genannten Beispiel beschrieben insbesondere aus Wachs gefertigt sein. Alternativ dazu könnte die Lage 7, 8 aber zum Beispiel auch eine Kunststoffwand mit Wachsüberzug sein, wobei die Kunststoffwand das Wabenmuster aufweist oder das Wabenmuster durch den Wachsüberzug gebildet wird. Für die Kunststoffwand kann insbesondere rePET, d.h. recyceltes PET (Polyethylenterephthalat), verwendet werden.

Der genannte Schutzlack 11 kann vorgesehen werden, um ein unmittelbares Anschmelzen der Lage 7, 8 and den PTC-Heizlack 10 zu unterbinden.

Figur 3 zeigt erstens die elektrische Kontaktierung des PTC-Heizlacks 10 in einer Ausführungsform. Hierbei werden aus der PTC-Heizfolie 6 Elektroden 12 herausgeführt, um einen externen Anschluss zu bilden. In der obengenannten Ausführungsform von Figur 2 befinden sind die Elektroden 12 zwischen dem Trägermaterial 9 und dem PTC-Heizlack 10. Die Elektroden 12 können durch einen Schlitz im Rähmchen 2 hindurchgeführt werden. Alternativ könnten die Elektroden 12 auch um das Rähmchen 2 herumgeführt werden. Eine alternative Variante zur elektrischen Kontaktierung ist unten im Zusammenhang mit Figur 1 beschrieben.

Alternativ oder zusätzlich kann die PTC-Heizfolie 6 über im Rähmchen 2 liegende Drähte oder Flachkabel mit den Kontaktstellen an den Außenlaschen 13 des Rähmchens 2 verbunden oder aus dem Bienenstock geführt werden. Werden die Rähmchen 2 über eine Kontaktstelle an den Außenlaschen 13 mit Strom versorgt, können im Bienenstock zwei Leisten montiert werden, welche die Positionierung und Energieverteilung auf die einzelnen Rähmchen 2 gewährleisten.

Die PTC-Heizfolien 6 können über eine Spannungsversorgung und/oder ein Steuergerät mit Energie versorgt werden. Es können einzelne Brutwaben bzw. Honigwaben erhitzt werden oder alle gleichzeitig.

Zweitens zeigt Figur 3, dass die PTC-Heizfolie 6 mit zwei Edelstahlblechen 14 verklebt (Edelstahlblech 14 / PTC-Heizfolie 6 / Edelstahlblech 14) werden kann, um die Stabilität der Mittelwand 3 zu erhöhen. Alternativ dazu könnten auch Kunststoffplatten oder Platten aus einem anderen Material eingesetzt werden.

Figur 4 zeigt, dass sich die Edelstahlbleche 14 jeweils zwischen der PTC-Heizfolie 6 und der Lage 7, 8 mit dem Wabenmuster befinden. Im dargestellten Beispiel ist die Lage 7, 8 eine Wachsschicht, die das typische Wabenmuster aufweist. Zusammengefasst kann die PTC-Heizfolie 6 zum Zwecke einer homogeneren Wärmeverteilung und erhöhten Stabilität in "Sandwich"- Bauweise beispielsweise zwischen den genannten zwei Edelstahlblechen 14 oder Kunststoffplatten montiert werden kann.

Überdies kann die Mittelwand 3 zusätzlich eine Verteillage aus Metall umfassen, die zur effizienteren Wärmeverteilung in der Mittelwand 3 beiträgt. Beispielsweise kann der PTC-Heizlack 10 unmittelbar auf eine Lage 7 mit dem Wabenmuster aufgedruckt sein. Die Verteillage kann dann zwischen dem PTC-Heizlack 10 und der zweiten Lage 8 mit dem Wabenmuster angeordnet sein.

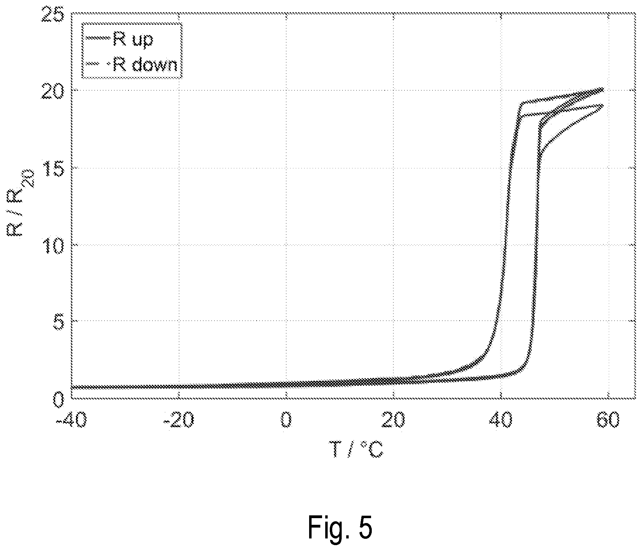

Die Funktionsweise der PTC-Heizfolie 6 wird nun im Detail anhand von Figur 5 näher erläutert. Auf der Ordinate des Diagramms von Figur 5 ist der Widerstand der PTC-Heizfolie im Verhältnis zu dem Widerstand der PTC-Heizfolie bei einer Temperatur von 20 °C aufgetragen. Auf der Abszisse ist die Temperatur der PTC-Heizfolie 6 aufgetragen.

Die Aufheizphase (R up) und die Abkühlphase (R down) der Heizkurven fallen im Wesentlichen zusammen. Es ist ersichtlich, dass die PTC-Heizfolien 6 selbstständig bei einer vorbestimmten Temperatur einregeln, da der Widerstand bei dieser vorbestimmten Temperatur sprunghaft zunimmt.

In der Praxis wird beispielsweise eine konstante Spannung von 12 V oder 24 V an den PTC-Heizlack 10 angelegt. Eine Spannung von unter 48 ist jedenfalls bevorzugt, um die Mittelwand 3 als Niederspannungsteil auszubilden. In der Aufheizphase erwärmt sich der PTC-Heizlack 10, bis eine vorbestimmte Temperatur, beispielsweise von 40 °C bis 42 °C, erreicht wird. Bei dieser Temperatur steigt der Widerstand des PTC-Heizlacks 10 sprunghaft an und es wird lokal kein weiterer Strom aufgenommen, d.h. der Stromfluss wird lokal gestoppt. Nach einer gewissen Zeit ist der gesamte PTC-Heizlack 10 auf die genannte Temperatur erhitzt, sodass es zu keinem weiteren Stromfluss durch den PTC-Heizlack 10 kommt. Je nach Ausführungsform kann Gleichstrom oder Wechselstrom an den PTC-Heizlack 10 angelegt werden. Es ist daher ersichtlich, dass der PTC-Heizlack 10 nicht kompliziert angesteuert werden muss, um die gewünschte Temperatur zu erreichen, sondern es ist ausreichend, wenn eine konstante Spannung an den PTC-Heizlack 10 angelegt wird.

Die vorbestimmte Temperatur, bei der sich die PTC-Heizfolie 6 einregelt, ist durch das verwendete Material und das Foliendesign wählbar. Wenn Carbonlack für den PTC-Heizlack 10 verwendet wird, ist das Foliendesign für den Fachmann leicht wählbar, um bei der vorbestimmten angelegten Spannung eine vorbestimmte Temperatur von beispielsweise 41 °C zu wählen. Bevorzugt stellt sich die Temperatur des PTC-Heizlacks 10 auf 40 °C bis 42 °C ein, wenn eine Spannung von 6 V bis 48 V, bevorzugt von 12 V bis 24 V, an den PTC-Heizlack 10 angelegt wird. Allgemeiner kann eine Temperatur gewählt werden, die zwischen 40 °C und 42 °C oder zwischen 39 °C und 43 °C liegt. Es wird somit kein Steuergerät benötigt, um die vorbestimmte Temperatur der PTC-Heizfolie 6 anzusteuern, was durch den nichtlinearen PTC-Effekt der PTC-Heizfolie 6 erzielt wird.

Die vorbestimmte Temperatur und/oder das Aufheizverhalten der PTC-Heizfolie 6 ist an den jeweiligen Verwendungszweck anzupassen. Die Aufheizgeschwindigkeit kann in der Fertigung durch Einstellen eines bestimmten Widerstandes bei 20 °C erreicht werden. Mit dem PTC-Heizlack 10 mit nichtlinearem PTC-Effekt dauert die Aufheizphase in der Regel 5 bis 15 Minuten. Die Aufheizphase kann daher schneller ausgeführt werden als bei einem Kaltleiterdraht mit linearem PTC-Effekt, da der PTC-Heizlack 10 nicht überhitzen kann.

Insbesondere eignet sich die PTC-Heizfolie 6 für den Verwendungszweck der Varroadezimierung. Es ist bekannt, dass Varroamilben bei einer Temperatur von ca. 40 °C absterben, während die Bienenbrut bei dieser Temperatur unbeeinträchtigt bleibt. Steigt die Temperatur jedoch über ca. 42 °C, so kommt es auch zu einem Schaden an der Bienenbrut. Für den Verwendungszweck der Varroadezimierung wird die vorbestimmte Temperatur der PTC-Heizfolie damit beispielsweise bei 41 °C und/oder derart eingestellt, dass diese 42 °C nicht überschreitet.

Für andere Verwendungszwecke kann die Temperatur jedoch auch geringer gewählt werden. Hierzu zählen insbesondere die Verwendungszwecke der Reduktion der Honigverluste durch Melezitosehonig, der Volksstärkung im Frühjahr und der Erhöhung der Flexibilität des Erntezeitpunktes. Beispielsweise kann mittels eines Steuergeräts auch eine niedrigere Temperatur erzielt werden als die genannte vorbestimmte Temperatur, bei der sich der PTC-Heizlack 10 einregelt. In einer Ausführungsform kann der PTC-Heizlack 10 mittels eines Steuergeräts auf 30 °C bis 37 °C, bevorzugt auf 35 °C angesteuert werden. Erst zu einem späteren Zeitpunkt im Jahr wird der PTC-Heizlack 10 auf jene Temperatur von 40 °C bis 42 °C erhitzt, um die Varroadezimierung durchzuführen.

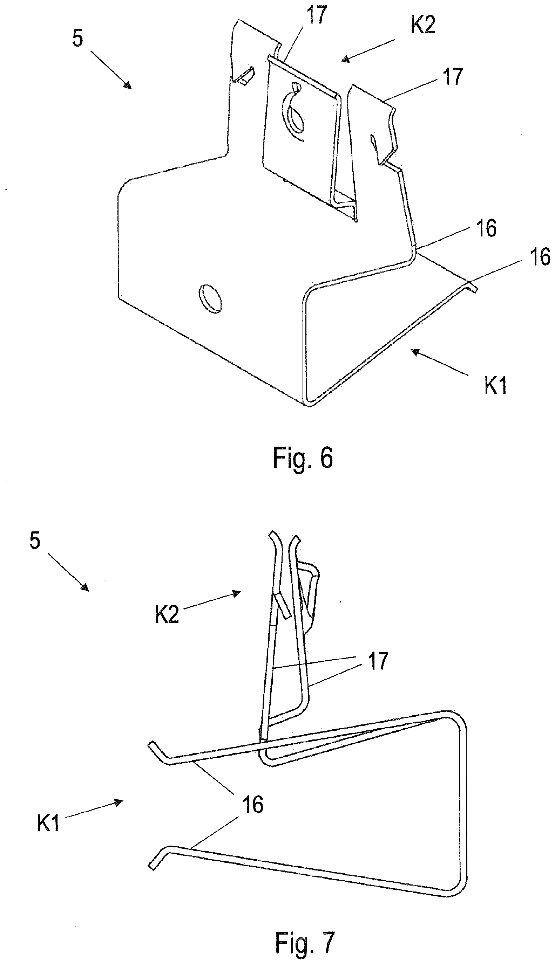

Zurückkommend auf Figur 1 ist dargestellt, dass die Mittelwand 3 mittels lösbaren Klammereinrichtungen 5, umgangssprachlich auch Clips genannt, im Rähmchen 2 montiert werden kann. Alternativ könnte die Mittelwand 3 wie aus dem Stand der Technik bekannt in das Rähmchen 2 eingelötet werden. Die Figuren 6 und 7 zeigen eine Klammereinrichtung 5 im Detail. Diese Klammereinrichtung 5 weist zwei Klammern K1 und K2 auf, wobei die erste Klammer K1 das Rähmchen 2 lösbar einklemmt und die zweite Klammer K2 die Mittelwand 3 lösbar einklemmt. In einer anderen Ausführungsform kann eine der Klammern K1, K2 durch eine unlösbare Verbindung oder eine andere Verbindung wie eine Schraubverbindung ersetzt werden.

Die Klammereinrichtungen 5 fixieren die Mittelwand 3 im Rähmchen 2, was beispielsweise durch Federkraft, formschlüssige Verbindung oder kraftschlüssige Verbindung funktionieren kann. Die Klammereinrichtungen 5 können durch Krafteinwirkung beispielsweise manuell von der Mittelwand 3 und/oder vom Rähmchen 2 gelöst werden, sodass die Mittelwand 3 aus dem Rähmchen 2 genommen werden kann. Das Lösen der Klammereinrichtung 5 kann beispielswiese dadurch erfolgen, dass die Klammern K1, K2 der Klammereinrichtung 5 entgegen einer Vorspannkraft ausgeweitet werden. Auch könnten die Klammern K1, K2 und/oder die Klammereinrichtung 5 ein Gelenk bzw. Scharnier aufweisen, welches das Lösen der Klammereinrichtung 5 erleichtert.

Die Klammereinrichtungen 5 sind als Federstahl oder Kunststoff ausgebildet und beispielsweise aus einem Blech oder als Spritzgussteil gefertigt. Geeignete Materialen für die Klammereinrichtung 5 sind Kunststoffe wie glasfaserverstärktes Polyamid (PA) oder rostfreier Stahl. Die Dicke des Federstahls bzw. des Kunststoffs ist derart gewählt, dass ein manuelles Lösen vom Rähmchen 2 bzw. von der Mittelwand 3 ermöglicht wird, gleichzeitig jedoch auch eine hinreichend starke Federkraft auf die Mittelwand 3 bzw. auf das Rähmchen 2 ausgeübt wird, sodass die Mittelwand 3 im Rähmchen 2 fixiert wird, wenn keine äußere Kraft auf die Klammereinrichtung 5 einwirkt.

Alternativ oder zusätzlich, beispielsweise wenn Federstahl eingesetzt wird, das nicht ausreichend federnd wirkt, um die Mittelwand 3 zu fixieren, kann die Mittelwand 3 Ösen 15 oder Löcher aufweisen, in welche die Klammereinrichtung 5 eingreifen kann. Die Klammereinrichtung 5 kann hierzu eine Schraube oder einen einstückig an der Klammereinrichtung 5 ausgebildeten Bolzen aufweisen. Die Ösen 15 sind mit einem Innenring ausgestattet, um eine elektrische Kontaktierung zu erleichtern. Die Schraube bzw. der Bolzen kann mit einer Mutter auf der anderen Seite der Öse 15 fixiert werden. Grundsätzlich kann auch ein einfaches Loch für die Kontaktierung verwendet werden, wobei dies jedoch fehleranfälliger ist.

Wie in den Figuren 6 und 7 gezeigt weist die erste Klammer K1 zwei Griffe 16 auf, die an Ihren Spitzen einen Abstand aufweisen, der geringer ist als die Dicke des Rähmchens 2. Insbesondere liegt dieser Abstand zwischen 8 mm und 12 mm oder zwischen 18 und 22 mm, sodass die meisten Rähmchen 2 eingespannt werden können. Die zweite Klammer K2 weist zwei Griffe 17 auf, die an Ihren Spitzen einen Abstand aufweisen, der geringer ist als die Dicke der Mittelwand 3. Durch manuelles Einwirken können die Klammern K1, K2 aufgebogen werden, um das Rähmchen 2 bzw. die Mittelwand 3 aufzunehmen bzw. freizugeben. Alternativ könnten die Abstände auch gleich oder größer als die Dicke des Rähmchens 2 bzw. der Mittelwand 3 sein, wobei das Einklemmen hier beispielsweise durch eine Schraubverbindung durch Löcher in der Klammereinrichtung 5, der Mittelwand 3 und/oder dem Rähmchen 2 erfolgen kann.

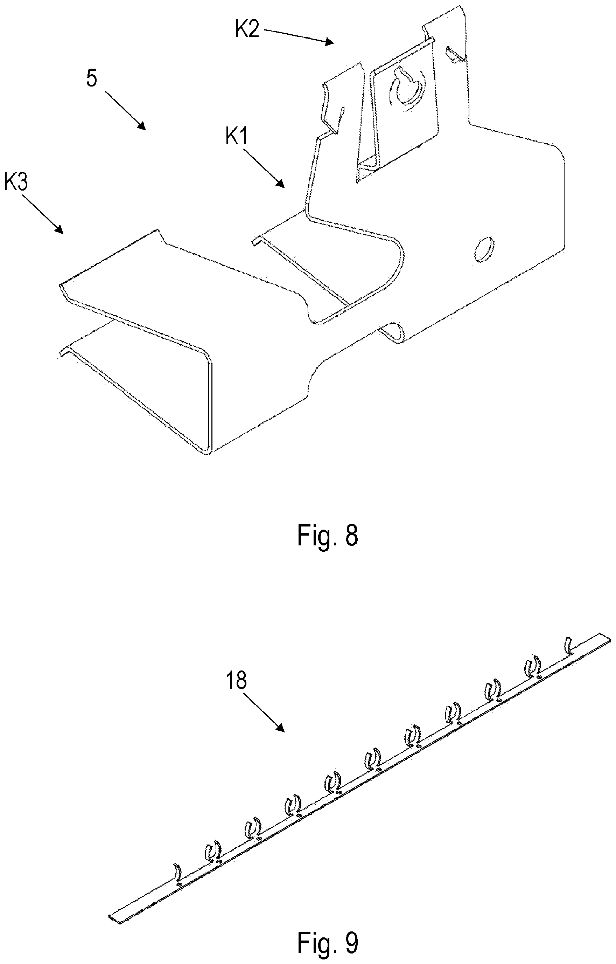

Figur 8 zeigt eine Ausführungsform der Klammereinrichtung 5, die eine verlängerte Kontaktierung für die Außenlaschen 13 aufweist. Dazu weist diese Klammereinrichtung 5 eine optionale dritte Klammer K3 auf, die auch durch einen einfachen Steg ersetzt werden könnte.

Wie dargestellt ist die Mittelwand 3 rechteckig und es sind insgesamt vier Klammereinrichtungen 5 vorgesehen, wobei je eine Klammereinrichtung 5 in einer Ecke der Mittelwand 3 vorgesehen ist. In anderen Ausführungsformen könnten jedoch auch nur zwei Klammereinrichtungen 5, nur drei Klammereinrichtungen 5 oder mehr als vier Klammereinrichtungen 5 vorgesehen sein. Beispielsweise könnten Klammereinrichtungen 5 alternativ oder zusätzlich zur Anbringung in den Ecken in der Mitte der Seite der Mittelwand 3 angebracht werden.

Alle Klammereinrichtungen 5 der Vorrichtung 1 können gleich oder unterschiedlich ausgebildet sein. Wie aus Figur 1 ersichtlich ist, hat beispielsweise die linke untere Klammereinrichtung 5 eine andere Form als die rechte untere Klammereinrichtung 5. Eine oder alle Klammereinrichtungen 5 können zum Beispiel wie die linke untere Klammereinrichtung 5 das Rähmchen 2 nur an einer der Längsseiten, beispielsweise einer der Holzlatten 4, umgreifen und nicht um einen Eckbereich des Rähmchens 2 geführt sein. Eine oder alle Klammereinrichtungen 5 können zum Beispiel wie die rechte untere Klammereinrichtung 5 das Rähmchen 2 sowohl an einer der Längsseiten als auch um den Eckbereich umgreifen, wodurch die Stabilität der Mittelwand 3 im Rähmchen 2 weiter erhöht wird.

Weist das Rähmchen 2 Außenlaschen 13 auf, mittels welchen das Rähmchen 2 in den Bienenstock gehängt werden kann, kann die Klammereinrichtung 5 wie in Figur 8 gezeigt mit der dritten Klammer K3 auch die Außenlaschen 13 umgreifen bzw. zumindest auf diesen aufliegen. In Figur 1 ist dies für die beiden oberen Klammereinrichtungen 5 dargestellt.

Selbst wenn Klammereinrichtungen 5 eingesetzt werden, kann die elektrische Kontaktierung der beheizten Mittelwand 3 einerseits wie oben für die Figuren 2 und 3 beschrieben erfolgen, sodass Elektroden 12 aus der PTC-Heizfolie 6 geführt werden. Andererseits können auch die Klammereinrichtungen 5 selbst dazu eingesetzt werden, eine Kontaktierung für die beheizte Mittelwand 3 zu bilden. Beispielsweise kann die PTC-Heizfolie 6 an jener Stelle der Mittelwand 3 freiliegen, an der die Kontaktierung die Mittelwand 3 fixiert. In anderen Worten ist die Mittelwand 3 an dieser Stelle frei von der Lage 7, 8 und gegebenenfalls frei vom Schutzlack 11. Besonders elegant kann die Kontaktierung durch die Öse 15 vorgesehen werden. Bei einem einfachen Loch durch die Mittelwand 3 liegt die PTC-Heizfolie 6 bzw. der PTC-Heizlack 10 zumindest im Innenumfang des Lochs frei, sodass auch diese Lösung möglich ist.

Sobald die Klammereinrichtungen 5 die PTC-Heizfolie 6 kontaktieren, kann eine Stromzufuhr an die Klammereinrichtungen 5 angelegt werden, um die PTC-Heizfolie 6 zu erwärmen. Besonders bevorzugt bilden die Klammereinrichtungen 5 eine Kontaktierung bis an die Außenlaschen 13 des Rähmchens 2. In diesem Fall können im Bienenstock zwei Leisten 18 (Figur 9) montiert sein, welche die Positionierung und Energieverteilung auf das Rähmchen 2 und somit auf die PTC-Heizfolie 6 gewährleisten. Ist die Leiste 18 einstückig aus Metall gefertigt, werden alle Mittelwände 3 gleichzeitig erhitzt. In alternativen Ausführungsformen könnte die Leiste mit Isolatoren ausgestattet werden, um ein individuelles Erhitzen einzelner Mittelwände 3 zu ermöglichen.

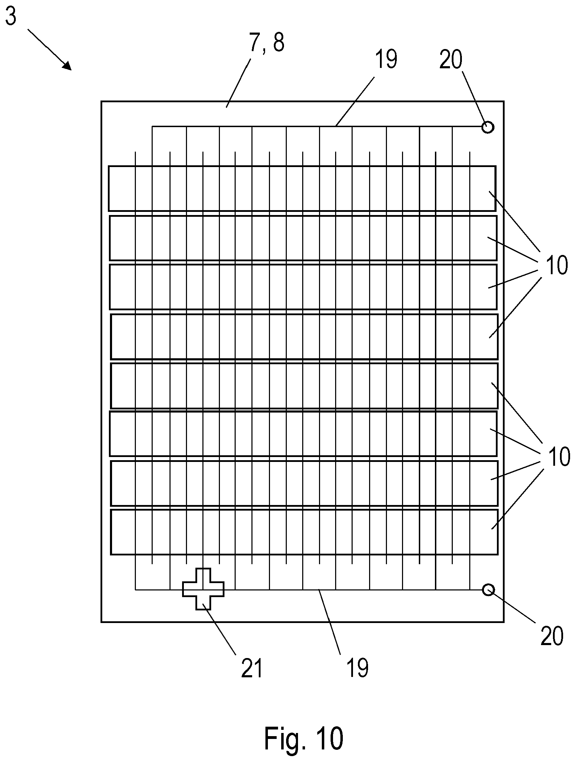

Figur 10 zeigt eine konkrete Ausführungsform der Mittelwand 3 im Detail. Zur Herstellung dieser Mittelwand 3 wird eingangs die erste Lage 7 bereitgestellt, beispielswiese eine PET-Folie, bevorzugt mit einer Dicke von 100 µm. Danach werden Leiterbahnen 19 auf die erste Lage 7 aufgedruckt, wobei die Leiterbahnen 19 bevorzugt aus Silber bestehen und wobei die Leiterbahnen 19 weiters bevorzugt eine mäanderförmige Ausnehmung ausbilden, sodass der PTC-Heizlack 10 als Widerstandselement zwischen den Leiterbahnen 19 wirken kann. Danach wird der PTC-Heizlack 10 in Streifen auf die erste Lage 7 bzw. auf die Leiterbahnen 19, bevorzugt normal zu diesen, aufgedruckt. Der Abstand zwischen den Streifen begünstigt die Wärmeverteilung des PTC-Heizlacks 10, wobei der PTC-Heizlack 10 auch als einheitliche Fläche ohne Abstände aufgedruckt werden könnte. Der Abstand zwischen den Streifen ist jedenfalls so gering, dass weiterhin von einem vollflächigen PTC-Heizlack 10 gesprochen werden kann. Unter "vollflächig" wird hierin somit eine Fläche von größer als 90 %, bevorzugt größer als 95 %, bevorzugt von größer als 99 % der Gesamtfläche verstanden.

Danach wird eine Kleberschicht auf die erste Lage 7 bzw. die Leiterbahnen 19 aufgebracht, jedoch nur dort, wo sich kein PTC-Heizlack 10 befindet. Danach wird die zweite Lage 8 auf die erste Lage 7 aufgebracht, sodass sich der PTC-Heizlack 10, die Leiterbahnen 19, und der Kleber zwischen den zwei Lagen 7, 8 befinden, um einen Verbund zu bilden. Danach wird der Verbund bei einer vorbestimmten Temperatur gewalzt, um die noch unbeschichtete Mittelwand 3 mit einer Dicke von 50 µm bis 400 µm, üblicherweise 300 µm, zu erhalten.

Die Lagen 7, 8 mit darin befindlichem PTC-Heizlack 10 können danach mit Wachs beschichtet werden, um das Wabenmuster zu erhalten. Beispielsweise können vorgefertigte Wachsplatten auf die Lagen 7, 8 gepresst werden. Auch könnten die Lagen 7, 8 in ein Wachsbad getaucht und wieder aus diesem herausgezogen werden oder mit Wachs besprüht werden. Bevorzugt werden die Lagen 7, 8 mit darin befindlichem PTC-Heizlack 10 jedoch durch zwei Walzen gezogen, wobei sich ein Wachsbad im Zwickel zwischen den Walzen befindet und Wachs auf beide Seiten der Lagen 7, 8 nachgegossen wird. In wiederum anderen Ausführungsformen könnten die Lagen 7, 9 keine beidseitig glatten Folien sein, sondern jeweils auf einer Seite mit einem vorgeprägten Wabenmuster versehen sein.

Gegebenenfalls können gesonderte Löcher 20 für das Einhängen der Mittelwand 3 in das Rähmchen 2 eingearbeitet werden. Hierfür können die zwei genannten Lagen 7, 8 jeweils vor dem Herstellen des Verbundes ein oder mehrere Löcher aufweisen, die im Verbund deckungsgleich vorliegen. Bevorzugt sind die Löcher 20 in einer Lage 7 größer als in der anderen Lage 8, damit eine einseitige Kontaktierung für die Leiterbahnen 19 ermöglicht wird. Es hat sich herausgestellt, dass es möglich ist, die Löcher 20 bereits vor dem Beschichten mit Wachs 4 herzustellen. In diesem Fall sind die Löcher 20 nach dem Beschichten mit Wachs 4 bedeckt, wobei das Wachs 4 jedoch leicht entfernt werden kann, wenn die Mittelwand 3 in das Rähmchen 2 eingehängt werden soll.

Überdies kann eine Passmarke 21 auf zumindest eine der Lagen 7, 8 aufgedruckt sein. Dies ermöglicht, die Position des PTC-Heizlacks 10 genau zu bestimmen, insbesondere wenn in einer Massenfertigung ein Verbund erzeugt wird, der aus einem Folienband mit vielen hintereinander angeordneten Heizflächen besteht. Die Passmarke 21 ermöglicht dann ein genaues Abtrennen der Mittelwände.

## Patentansprüche

1. Beheizbare Mittelwand (3) für einen Bienenstock zur hyperthermischen Varroadezimierung und/oder zum Beheizen von Honigwaben zur Maximierung der Ernteerträge,
**dadurch gekennzeichnet, dass**
die Mittelwand (3) einen vollflächigen PTC-Heizlack (10) mit einem nichtlinearen PTC-Effekt umfasst, wobei die Mittelwand (3) auf zumindest einer Seite des PTC-Heizlacks (10) eine Lage (7, 8) mit einem Wabenmuster aufweist.

2. Mittelwand (3) nach Anspruch 1, wobei der PTC-Heizlack (10) auf einem von der Lage (7, 8) gesonderten Substrat (9) oder unmittelbar auf der Lage (7, 8) aufgedruckt ist.

3. Mittelwand (3) nach Anspruch 1 oder 2, wobei der Heizlack (10) Carbonlack ist.

4. Mittelwand (3) nach einem der Ansprüche 1 bis 3, wobei zwischen der PTC-Heizfolie (6) und den Lagen (7, 8) auf beiden Seiten ein Edelstahlblech (14), eine Kunststoffplatte oder eine Kunststofffolie angeordnet ist.

5. Mittelwand (3) nach einem der Ansprüche 1 bis 4, wobei die PTC-Heizfolie (6) als Niederspannungsteil ausgeführt ist, und/oder wobei die PTC-Heizfolie (6) zur Varroadezimierung ausgebildet ist.

6. Mittelwand (1) nach einem der Ansprüche 1 bis 5, wobei ein Schutzlack (11) auf einer Seite des Heizlacks (10) vorgesehen ist, und/oder wobei die zumindest eine Lage (7, 8) eine Kunststoffwand mit Wachsüberzug ist, wobei die Kunststoffwand das Wabenmuster aufweist, wobei die Kunststoffwand bevorzugt aus recyceltem Polyethylenterephthalat besteht.

7. Vorrichtung (1) zur Bereitstellung eines Wabenmusters in einem Bienenstock, umfassend eine Mittelwand (3) nach einem der Ansprüche 1 bis 6 und ein Rähmchen (2) mit einem Zwischenraum in der Größe der Mittelwand (3), wobei der PTC-Heizlack (10) bevorzugt über im Rähmchen (2) liegende Drähte oder Flachkabel mit Kontaktstellen an den Außenlaschen (13) des Rähmchens (2) verbunden ist.

8. Vorrichtung (1) nach Anspruch 7, wobei die Vorrichtung (1) ferner zumindest eine Klammereinrichtung (5) umfasst, wobei die Klammereinrichtung (5) die Mittelwand (3) am Rähmchen (2) fixiert und zumindest eine Klammer (K1, K2) aufweist, welche das Rähmchen (2) oder die Mittelwand (3) lösbar einklemmt, wobei die Klammereinrichtung (5) bevorzugt eine erste Klammer (K1) und eine zweite Klammer (K2) aufweist, wobei die erste Klammer (K1) das Rähmchen (2) lösbar einklemmt und die zweite Klammer (K2) die Mittelwand (3) lösbar einklemmt.

9. Vorrichtung (1) nach Anspruch 8, wobei die Mittelwand (3) eine rechteckige Form aufweist und die Vorrichtung (1) vier Klammereinrichtungen (5) umfasst, wobei die Klammereinrichtungen (5) die Mittelwand (3) an jeweils einer Ecke im Rähmchen (2) hält, und/oder wobei die Mittelwand (3) für jede Klammereinrichtung (5) eine Öse oder ein Loch aufweist, in welche je eine Klammereinrichtung (5) in der geschlossenen Stellung eingreift, und/oder wobei die Klammereinrichtungen (5) aus Federstahl oder Kunststoff, bevorzugt glasfaserverstärktem Polyamid, gefertigt sind.

10. Vorrichtung (1) nach einem der Ansprüche 7 bis 9, wobei zumindest eine der Klammereinrichtungen (5) eine elektrische Kontaktierung bildet, welche eine elektrische Verbindung mit dem PTC-Heizlack (10) der Mittelwand (3) herstellt, wobei das Rähmchen (2) bevorzugt an zwei seiner Ecken jeweils eine Außenlasche (13) zum Einhängen in den Bienenstock umfasst und jene zwei Klammereinrichtungen (5) Kontaktierungen zum PTC-Heizlack (10) bilden, die neben den Außenlaschen (13) des Rähmchens (2) liegen.

11. Bienenstock umfassend zumindest eine Vorrichtung (1) nach einem der Ansprüche 7 bis 10, wobei im Bienenstock bevorzugt zwei Leisten montiert sind, welche die Positionierung und Energieverteilung auf das Rähmchen (9) gewährleisten.

12. Verfahren zum Herstellen einer beheizbaren Mittelwand (3) für einen Bienenstock zur hyperthermischen Varroadezimierung und/oder zum Beheizen von Honigwaben zur Maximierung der Ernteerträge, umfassend die Schritte:
- Bereitstellen einer ersten Lage (7), bevorzugt einer Folie,
- vollflächiges Aufdrucken eines PTC-Heizlacks (10) mit nichtlinearem PTC-Effekt auf die erste Lage (7),
- gegebenenfalls Aufbringen einer zweiten Lage (8), bevorzugt einer Folie, auf den aufgedruckten PTC-Heizlack (10) gegenüber der ersten Lage (7),
- Versehen der ersten Lage (7) und gegebenenfalls der zweiten Lage (8) mit einem Wabenmuster.

13. Verfahren nach Anspruch 12, wobei vor dem Aufdrucken des PTC-Heizlacks (10) Leiterbahnen auf die erste Lage (7) aufgedruckt werden, wobei die Leiterbahnen (19) bevorzugt aus Silber bestehen und wobei die Leiterbahnen (19) weiters bevorzugt eine mäanderförmige Ausnehmung ausbilden, wobei die Leiterbahnen (19) bevorzugt entlang einer Längsrichtung der ersten Lage (7) verlaufen und der PTC-Heizlack (10) streifenweise auf die erste Lage (7) aufgedruckt wird, wobei die Streifen entlang einer Querrichtung normal zur genannten Längsrichtung verlaufen.

14. Verfahren nach einem der Ansprüche 12 oder 13, wobei vor dem Aufbringen der zweiten Lage (8) eine Klebschicht auf die erste Lage (7) aufgebracht wird, jedoch nur an jenen Stellen, die frei von PTC-Heizlack (10) sind, und/oder wobei das Aufbringen des Wabenmusters durch Beschichten der ersten Lage (7) und gegebenenfalls der zweiten Lage (8) mit geschmolzenem Wachs im Wabenmuster erfolgt, wobei das Wabenmuster bevorzugt durch zumindest eine Walze aufgeprägt wird.

15. Verfahren nach einem der Ansprüche 12 bis 14, wobei die erste Lage (7) in zwei Eckbereichen ein erstes Loch mit einem ersten Durchmesser aufweist und die zweite Lage (7) in den zwei gleichen Eckbereichen ein zweites Loch mit einem zweiten Durchmesser aufweist, der zur Kontaktierung an den Leiterbahnen bevorzugt großer als der erste Durchmesser ist.

## Claims

1. A heatable centre wall (3) for a beehive for the hyperthermal reduction of varroa and/or for heating honeycombs for maximizing the harvest yields,
**characterized in that**
the centre wall (3) comprises a continuous PTC heating varnish (10) having a non-linear PTC effect, wherein the centre wall (3) has on at least one side of the PTC heating varnish (10) a layer (7, 8) having a comb pattern.

2. A centre wall (3) according to claim 1, wherein the PTC heating varnish (10) is printed onto a substrate (9) separated from the layer (7, 8) or directly onto the layer (7, 8).

3. A centre wall (3) according to claim 1 or 2, wherein the heating varnish (10) is a carbon varnish.

4. A centre wall (3) according to any of the claims 1 to 3, wherein there is arranged between the PTC heating foil (6) and the layers (7, 8) on both sides a stainless steel panel (14), a plastic plate or a plastic foil.

5. A centre wall (3) according to any of the claims 1 to 4, wherein the PTC heating foil (6) is configured as a low-voltage element and/or, wherein the PTC heating foil (6) is configured to reduce varroa.

6. A centre wall (1) according to any of the claims 1 to 5, wherein a protective varnish (11) is provided on one side if the heating varnish (10), and/ or wherein the at least one layer (7, 8) is a plastic wall having a wax coating, wherein the plastic wall has the comb pattern, wherein the plastic wall is preferably composed of recycled polyethylene terephthalate.

7. A device (1) for providing a comb pattern in a beehive, comprising a centre wall (3) according to any of the claims 1 to 6 and a small frame (2) having a clear spacing of the size of the centre wall (3), wherein the PTC heating varnish (10) is preferably connected via wires or flat cables situated within the small frame (2) to contact points at the external flaps (13) of the small frame (2).

8. A device (1) according to claim 7, wherein the device (1) further comprises at least one clamping member (5), wherein the clamping member (5) fixes the centre wall (3) at the small frame (2) and includes at least one clamp (K1, K2), which releasably clamps the small frame (2) or the centre wall (3), wherein the clamping member (5) has preferably a first clamp (K1) and a second clamp (K2), wherein the first clamp (K1) releasably clamps the small frame (2) and the second clamp (K2) releasably clamps the centre wall (3).

9. A device (1) according to claim 8, wherein the centre wall (3) has a rectangular shape and the device (1) comprises four clamping members (5), wherein the clamping members (5) hold the centre wall (3) at respectively one corner within the small frame (2) and/or wherein the centre wall (3) for every clamping member (5) has an eyelet or a hole, which respectively one clamping member (5) engages in the closed position, and/or wherein the clamping members (5) are manufactured from spring steel or plastic, preferably from glass fibre reinforced polyamide.

10. A device (1) according to any of the claims 7 to 9, wherein at least one of the clamping members (5) forms an electric contact, which generates an electric connection with the PTC heating varnish (10) of the centre wall (3), wherein the small frame (2) preferably comprises at two of its corners respectively one external flap (13) for hooking into the beehive and wherein those two clamping members (5) form contacts to the PTC heating varnish (10), which are situated next to the external flaps (13) of the small frame (2).

11. A beehive comprising at least one device according to any of the claims 7 to 10, wherein there are mounted within the beehive two ledges, which ensure the positioning of and energy distribution onto the small frame (9).

12. A method for producing a heatable centre wall (3) for a beehive for the hyperthermal reduction of varroa and/or for heating honeycombs for maximizing the harvest yields, comprising the steps of:
- providing a first layer (7), preferably a foil,
- continuously printing a PTC heating varnish (10) having a non-linear PTC effect onto the first layer (7),
- optionally applying a second layer (8), preferably a foil, onto the printed PTC heating varnish (10) opposite to the first layer (7),
- providing the first layer (7) and optionally the second layer (8) with a comb pattern.

13. A method according to claim 12, wherein before the printing of the PTC heating varnish (10) there are printed onto the first layer (7) printed circuit board tracks, wherein the printed circuit board tracks (19) are preferably composed of silver and wherein the printed circuit board tracks (19) further preferably form a meander-like recess, wherein the printed circuit board tracks (19) preferably extend along a longitudinal direction of the first layer (7) and the PTC heating varnish (10) is printed strip-like onto the first layer (7), wherein the strips extend along a transverse direction perpendicular to the longitudinal direction mentioned.

14. A method according to any of the claims 12 to 13, wherein before the application of the second layer (8) there is applied an adhesive layer onto the first layer (7), however, only onto those locations free of PTC heating varnish (10), and/or wherein the application of the comb pattern is realized by coating the first layer (7) and optionally the second layer (8) with molten wax in a comb pattern, wherein the comb pattern is preferably impressed by at least one roll.

15. A method according to any of the claims 12 to 14, wherein the first layer (7) has in two corner areas a first hole having a first diameter and the second layer (8) has in the same two corner areas a second hole having a second diameter, which is preferably larger than the first diameter for forming contacts at the printed circuit board tracks.

## Revendications

1. Paroi intermédiaire chauffante (3) pour ruche pour la décimation hyperthermique du varroa et/ou pour le chauffage de rayons de miel pour maximiser les récoltes, **caractérisée en ce que**
cette paroi intermédiaire (3) comporte une laque chauffante PTC (10) ayant un effet PTC non linéaire, cette paroi intermédiaire (3) présentant sur au moins un côté de la laque chauffante PTC (10) une garniture (7, 8) avec une structure en nid d'abeilles.

2. Paroi intermédiaire (3) selon la revendication 1, dans laquelle la laque chauffante PTC (10) est imprimée sur un substrat (9) séparé de la garniture (7, 8) ou directement sur la garniture (7, 8).

3. Paroi intermédiaire (3) selon la revendication 1 ou 2, dans laquelle la laque chauffante (10) est une laque au carbone.

4. Paroi intermédiaire (3) selon une des revendications 1 à 3, dans laquelle, entre le film chauffant PTC (6) et les garnitures (7, 8) est disposé sur les deux côtés une tôle en acier inoxydable (14), une plaque de plastique ou un film de plastique.

5. Paroi intermédiaire (3) selon une des revendications 1 à 4, dans laquelle le film chauffant PTC (6) est configuré comme une pièce à basse tension et/ou dans laquelle le film chauffant PTC (6) est conçu pour la décimation du varroa.

6. Paroi intermédiaire (1) selon une des revendications 1 à 5, dans laquelle une laque de protection (11) est prévue sur une face de la laque chauffante (10) et/ou dans laquelle l'au moins une garniture (7, 8) est une paroi en plastique avec un revêtement de cire, laquelle paroi en plastique présente la structure en nid d'abeilles et laquelle paroi en plastique est faite de préférence de téréphtalate de polyéthylène recyclé.

7. Dispositif (1) pour la réalisation d'une structure en nid d'abeilles dans une ruche, comprenant une paroi intermédiaire (3) selon une des revendications 1 à 6 et un cadre (2) avec un espace intermédiaire de la taille de la paroi intermédiaire (3), dans lequel la laque chauffante PTC (10) est reliée aux maillons extérieurs (13) du cadre (2) de préférence par des fils ou des câbles rubans avec des points de contact placés dans le cadre (2).

8. Dispositif (1) selon la revendication 7, lequel dispositif (1) comprend en outre au moins un moyen de serrage (5), lequel moyen de serrage (5) fixe la paroi intermédiaire (3) au cadre (2) et présente au moins une pince (K1, K2) qui serre le cadre (2) ou la paroi intermédiaire (3) de façon détachable, le moyen de serrage (5) présentant de préférence une première pince (K1) et une deuxième pince (K2), la première pince (K1) serrant le cadre (2) de façon détachable et la deuxième pince (K2) serrant la paroi intermédiaire (3) de façon détachable.

9. Dispositif (1) selon la revendication 8, dans lequel la paroi intermédiaire (3) présente une forme rectangulaire et lequel dispositif (1) comprend quatre moyens de serrage (5), ces moyens de serrage (5) maintenant la paroi intermédiaire (3) dans le cadre (2) chacun au niveau d'un coin, et/ou la paroi intermédiaire (3) présentant pour chaque moyen de serrage (5) un oeillet ou un trou dans lequel un moyen de serrage (5) s'insère en position fermée, et/ou les moyens de serrage (5) étant faits en acier à ressorts ou en plastique, de préférence en polyamide renforcé de fibres de verre.

10. Dispositif (1) selon une des revendications 7 à 9, dans lequel au moins un des moyens de serrage (5) forme un contact électrique qui établit une liaison électrique avec la laque chauffante PTC (10) de la paroi intermédiaire (3), le cadre (2) comportant de préférence dans deux de ses coins un maillon extérieur (13) pour le suspendre dans la ruche et deux moyens de serrage (5) formant des contacts avec la laque chauffante PTC (10) qui sont situés près des maillons extérieurs (13) du cadre (2).

11. Ruche comprenant au moins un dispositif (1) selon une des revendications 7 à 10, deux barrettes qui assurent le positionnement et la distribution de l'énergie sur le cadre (9) étant montées de préférence dans la ruche.

12. Procédé de fabrication d'une paroi intermédiaire chauffante (3) pour ruche pour la décimation hyperthermique du varroa et/ou pour le chauffage de rayons de miel pour maximiser les récoltes, comprenant les étapes suivantes :
- fourniture d'une première garniture (7), de préférence d'un film,
- impression sur toute la surface d'une laque chauffante PTC (10) ayant un effet PTC sur la première garniture (7),
- le cas échéant, application d'une deuxième garniture (8), de préférence d'un film, sur la laque chauffante PTC (10) imprimée en face de la première garniture (7),
- équipement de la première garniture (7) et le cas échéant de la deuxième garniture (8) avec une structure en nid d'abeilles.

13. Procédé selon la revendication 12, selon lequel des pistes conductrices sont imprimées sur la première garniture (7) avant l'impression de la laque chauffante PTC (10), lesquelles pistes conductrices (19) sont de préférence en argent et lesquelles pistes conductrices (19) forment en outre de préférence une cavité sinueuse, ces pistes conductrices (19) courant de préférence dans la direction longitudinale de la première garniture (7) et la laque chauffante PTC (10) étant imprimée par bandes sur la première garniture (7), les bandes courant dans une direction transversale perpendiculaire à la direction longitudinale susmentionnée.

14. Procédé selon une des revendications 12 ou 13, selon lequel une couche de colle est appliquée sur la première garniture (7) avant la pose de la deuxième garniture (8), mais uniquement aux endroits qui sont dénués de laque chauffante PTC (10), et/ou selon lequel l'application de la structure en nid d'abeilles se fait en recouvrant la première garniture (7) et le cas échéant la deuxième garniture (8) avec de la cire fondue dans la structure en nid d'abeilles, la structure en nid d'abeilles étant de préférence imprimée par au moins un rouleau.

15. Procédé selon une des revendications 12 à 14, selon lequel la première garniture (7) présente dans deux zones d'angle un premier trou doté d'un premier diamètre et la deuxième garniture (7) présente dans les deux mêmes zones d'angle un deuxième trou doté d'un deuxième diamètre qui est de préférence supérieur au premier diamètre pour la mise en contact avec les pistes conductrices.
